(19)

Europäisches
Patentamt
European
Patent Office
Office européen
des brevets

(11) **EP 3 423 275 B1**

(12) **EUROPEAN PATENT SPECIFICATION**

(45) Date of publication and mention
of the grant of the patent:
**11.09.2019 Bulletin 2019/37**

(51) Int Cl.:
*B32B 27/28* (2006.01)        *B32B 27/30* (2006.01)
*B32B 27/32* (2006.01)        *B32B 27/36* (2006.01)
*B32B 7/02* (2019.01)

(21) Application number: **17751638.2**

(22) Date of filing: **18.07.2017**

(86) International application number:
**PCT/EP2017/068130**

(87) International publication number:
**WO 2018/015387 (25.01.2018 Gazette 2018/04)**

(54) **MULTILAYER SHEET FOR THERMOFORMING HAVING IMPROVED SAGGING RESISTANCE**

MEHRSCHICHTIGE FOLIE ZUM THERMOFORMEN MIT DURCHHANGBESTÄNDIGKEIT

FEUILLE MULTICOUCHE POUR THERMOFORMAGE AYANT UNE RÉSISTANCE À L'AFFAISSEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2016 EP 16180260**

(43) Date of publication of application:
**09.01.2019 Bulletin 2019/02**

(73) Proprietor: **Total Research & Technology Feluy
7181 Seneffe (BE)**

(72) Inventors:
• **ROUSSEAUX, Dimitri
1400 Nivelles (BE)**
• **BOUKALIDIS, Cristo
7332 Sirault (BE)**

(74) Representative: **Garcia Martin, Margarita
Total Research & Technology Feluy
Patent Department
Zone Industrielle Feluy C
7181 Seneffe (BE)**

(56) References cited:
**EP-A1- 1 787 804        WO-A1-01/96100
US-A1- 2005 004 303**

• **DATABASE WPI Week 200380 Thomson
Scientific, London, GB; AN 2003-856460
XP002774143, & JP 2003 103705 A (SUMITOMO
CHEM CO LTD) 9 April 2003 (2003-04-09)**
• **DATABASE WPI Week 200512 Thomson
Scientific, London, GB; AN 2005-083652
XP002766549, & JP 2005 007684 A (DENKI
KAGAKU KOGYO KK) 13 January 2005
(2005-01-13)**
• **DATABASE WPI Week 198904 Thomson
Scientific, London, GB; AN 1989-027435
XP002766550, & JP S63 299923 A (DENKI
KAGAKU KOGYO KK) 7 December 1988
(1988-12-07)**

## Description

### Field of the invention

The invention relates to multilayered sheets for thermoforming processing as well as thermoformed articles produced from these multilayered sheets.

### Background of the invention

In thermoforming, a soft polymer sheet is draped over or into a form or mould. In its basic form, a thermoforming process comprises the steps of:

a) heating the sheet to a temperature at which it is soft,
b) draping the soft sheet over or into a mould, thus obtaining a formed sheet,
c) cooling the formed sheet to a temperature at which it can maintain its shape, and
d) removing the formed sheet from the mould.

One of the problems that can be encountered in thermoforming is that, after being heated, the soft sheets may extend under their own weight. This phenomenon is called sagging and affects the uniformity of the sheet thickness distribution. In particular, when the sheet is large, the sagging of the sheet can be very important and the resulting bad thickness repartition leads to poor mechanical properties on the final thermoformed article.

Thus, there is an interest to find solutions to avoid or at least to lower sagging on large sheets during thermoforming processing.

Moreover, the lack of uniformity of the thickness distribution may have consequences on the electrical properties showed by the thermoformed articles. Indeed, thermoformed articles such as trays or carrier tapes used in packaging of electronic devices can be produced from multilayered sheets wherein at least one of the outer layers comprises a conductive material so that the layer should show specific electrical properties. When the surface layer is thin, a lack of uniformity in the thickness of the sheet may have consequences on the electrical properties showed by the article.

Thus, there is a need to find solutions to avoid or at least to lower sagging on multilayered sheets during thermoforming processing wherein at least one of the outer layers comprises a conductive material.

There is also a need to find solutions to avoid or at least to lower sagging on multilayered sheets during thermoforming processing wherein at least one of the outer layers comprises a conductive material, wherein the conductive material content is kept as low as possible.

There is also a need to find solutions to avoid or at least to lower sagging on multilayered sheets during thermoforming processing wherein at least one of the outer layers comprises a conductive material, wherein the conductive material content is kept as low as possible and further wherein the multilayered sheets show good brittle properties.

### Summary of the invention

It is therefore an object of the invention to provide multilayered sheets showing good sagging resistance even when processing large sheets. It is an object of the invention to provide multilayered sheets wherein at least one of the outer layers comprises a conductive material and wherein the multilayered sheets shows improved resistance to sagging during the thermoforming processing.

According to a first aspect, the invention provides a multilayered sheet containing at least one layer of each of:

- a surface layer A comprising a composite material, wherein said composite material comprises a first amorphous polymer having a glass transition temperature Tg1 and from 0.05 wt% to 4.0 wt%, based on the total weight of the composite material, of a conductive material;
- a substrate layer B comprising a polymer composition, wherein said polymer composition comprises at least 10 wt% as based on the total weight of the polymer composition of a second amorphous polymer having a glass transition temperature Tg2, the glass transition temperature Tg2 of the second amorphous polymer being higher than the glass transition temperature Tg1 of the first amorphous polymer; the glass transition temperature being determined according to ISO 11357-2:2013; and wherein the second amorphous polymer has a heat deflection temperature of at least 85°C as determined in accordance with ISO 75-2/A conditions 80 °C, 4H, 1.8 MPA, annealed; further wherein the heat deflection temperature of the polymer composition of layer B is at least 3.5 °C higher than the heat deflection temperature of the first amorphous polymer; and further wherein at least one of the outer layers is the surface layer A.

Surprisingly, it has been found by the inventors that sagging on large sheets can be significantly reduced when the substrate layer B is made of, or comprises, a second amorphous polymer having a glass transition temperature Tg2 higher than the glass transition temperature Tg1 of the first amorphous polymer present in the outer surface layer, and wherein said second amorphous polymer has a high heat deflection temperature (HDT) of 85 °C or more. As demonstrated in the examples, not all amorphous polymer used as the second amorphous polymer may achieve the sagging properties improvement, but the ones having a heat deflection temperature being high enough. Surprisingly, it has been found by the inventors that by the sagging properties improvement it was possible to produce thermoformed multilayered sheets having a very low content of CNT while keeping their electrical properties.

According to a second aspect, the invention provides the use, in a multilayered sheet, of at least one substrate layer B comprising a polymer composition, wherein said polymer composition comprises at least 10 wt% as based on the total weight of the polymer composition of a second amorphous polymer having a heat deflection temperature of at least 85 °C as determined in accordance with ISO 75-2/A conditions 80 °C, 4H, 1.8 MPA, annealed and a glass transition temperature Tg2 that is higher than the glass transition temperature Tg1 of a first amorphous polymer comprised in a composite material forming a surface layer A, wherein the composite material comprises a first amorphous polymer having a glass transition temperature Tg1 and from 0.05 wt% to 4.0 wt%, based on the total weight of the composite material, of a conductive material, wherein the multilayered sheet contains at least one layer of each of layer A and layer B and wherein at least one of the outer layers is the surface layer A, the glass transition temperature being determined according to ISO 1 1357-2:2013 and further wherein the heat deflection temperature of the polymer composition of layer B is at least 3.5 C higher than the heat deflection temperature of the first amorphous polymer. The use allows reducing sagging compared to a multilayered sheet comprising a substrate layer B made from a polymer composition having a glass transition temperature Tg similar or lower to the glass transition temperature Tg1 of the first amorphous polymer in the surface layer and/or comprising a second amorphous polymer with an HDT lower than 85 °C.

With preference, one or more of the following features can be used to further define the inventive multilayered sheet according to the first aspect of the invention and/or the inventive use according to the second aspect of the invention:

- Both of outer layers are a surface layer A.
- The thickness of layer B is at least 2 times the thickness of layer A, preferably at least 3 times, more preferably at least 4 times and even more preferably at least 5 times.
- The multilayered sheet comprises two or more layers B, wherein all layers B are made of the same polymer composition.
- The multilayered sheet comprises two or more layers A, wherein all layers A are made of the same composite material.
- The multilayered sheet contains at most two kinds of layers being layer A and layer B.
- The multilayered sheet comprises from 0.05 to 1.6 % by weight of carbon nanotubes based on the total weight of the multilayered sheet as determined according to ISO 11358, preferably from 0.08 to 0.9 % by weight of carbon nanotubes.

With preference, one or more of the following features can be used to further define the first and second amorphous polymer according to the first aspect of the invention and/or the inventive use according to the second aspect of the invention:

- The first and second amorphous polymers are selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof.
- The first amorphous polymer is selected from general purpose polystyrene (GPPS), high impact polystyrene (HIPS), acrylonitrile-butadiene-styrene (ABS) and mixture thereof.
- The first amorphous polymer is a polystyrene selected from general purpose polystyrene (GPPS), high impact polystyrene (HIPS), and mixture thereof.
- The first amorphous polymer has a melt flow index ranging from 1 to 10 g/10 min as determined according to ISO 1133 conditions H under a load of 5 kg at a temperature of 200 °C.
- The first amorphous polymer has a melt flow index of at least 1 g/10 min as determined according to ISO 1133 conditions H under a load of 5 kg at a temperature of 200 °C, preferably of at least 1.5 g/10 min, more preferably of at least 2.0 g/10 min and most preferably of at least 2.5 g/10 min.
- The first amorphous polymer has a melt flow index of at most 10 g/10 min as determined according to ISO 1133 conditions H under a load of 5 kg at a temperature of 200 °C, preferably of at most 5.0 g/10 min, more preferably of at most 4.0 g/10 min and most preferably of at most 3.5 g/10 min.
- The second amorphous polymer is selected from acrylonitrile-butadiene-styrene (ABS), poly(*p*-phenylene ether) (PPE), styrene acrylonitrile (SAN) and mixture thereof.

- The heat deflection temperature of the second amorphous polymer is at least 10 °C higher than the heat deflection temperature of the first amorphous polymer, the heat deflection temperature being determined according to ISO 75-2/A conditions 80 °C, 4H, 1.8 MPA, annealed, preferably at least 12 °C higher.
- The polymer composition of layer B has a heat deflection temperature that is preferably at least 5 °C, more preferably at least 10 °C higher than the heat deflection temperature of the composite material of layer A.
- The glass transition temperature Tg2 of the second amorphous polymer is at least 3 °C higher, and preferably 5 °C higher than the glass transition temperature Tg1 of the first amorphous polymer, the glass transition temperature being determined according to ISO 11357-2:2013.
- The polymer composition is a blend of miscible polymers, and the glass transition temperature Tg blend of the polymer composition is at least 3 °C higher, and preferably 5 °C higher, than the glass transition temperature Tg1 of the first amorphous polymer.
- The second amorphous polymer has a melt volume rate ranging from 1 to 10 $cm^3/10$ min as determined according to ISO 1133 under a load of 10 kg at a temperature of 220 °C.
- The second amorphous polymer has a melt volume rate of at least 2 $cm^3/10$ min as determined according to ISO 1133 under a load of 10 kg at a temperature of 220 °C, preferably of at least 3 $cm^3/10$ min, more preferably of at least 4 $cm^3/10$ min and most preferably of at least 5 $cm^3/10$ min.
- The second amorphous polymer has a melt volume rate of at most 9 $cm^3/10$ min as determined according to ISO 1133 under a load of 10 kg at a temperature of 220 °C, preferably of at most 8 $cm^3/10$ min, more preferably of at most 7 $cm^3/10$ min and most preferably of at most 6 $cm^3/10$ min.
- The second amorphous polymer has a heat deflection temperature of at least 88 °C as determined in accordance with ISO 75-2/A conditions 80 °C, 4H, 1.8 MPA, annealed, preferably at least 90 °C, more preferably at least 92 °C.

With preference, one or more of the following features can be used to further define the composite material of layer A according to the first aspect of the invention and/or the inventive use according to the second aspect of the invention:

- The composite material of layer A further comprises from 0.01 to 50 wt% as based on the total weight of the composite material of a styrenic copolymer, wherein preferably the styrenic copolymer is selected from styrene-butadiene-styrene block copolymer (SBS) or styrene-ethylene-butadiene-styrene block copolymer (SEBS).
- The content of the styrenic copolymer in the composite material of layer A is at least 0.01 wt% as based on the total weight of the composite material, preferably at least 1 wt%, more preferably at least 5 wt%, even more preferably at least 10 wt% and most preferably at least 15 wt%.
- The content of the styrenic copolymer in the composite material of layer A is at most 50 wt% as based on the total weight of the composite material, preferably at most 40 wt%, more preferably at most 35 wt%, even more preferably at most 30 wt% and most preferably at most 25 wt%.
- The conductive material in the composite material of layer A is selected from the group comprising carbon nanotubes, carbon nanofibres, carbon black, metal fibres, metal powders and blends thereof, preferably from the group comprising carbon nanotubes, carbon nanofibres, carbon black, and blends thereof, more preferably the conductive material is carbon nanotubes.
- The composite material of layer A comprises from 0.1 to 3.5 % by weight of carbon nanotubes based on the total weight of the composite material as determined according to ISO 11358, preferably from 0.5 to 3.0 % by weight of carbon nanotubes.
- The composite material of layer A has a surface resistivity of at most $1x10^8$ Ohm/sq, preferably at most $1x10^6$ Ohm/sq as determined according to CEI 60167.
- The composite material of layer A may comprise from 0.1 to 50 wt%, as based on the total weight of the composite material or the polymer composition respectively, of a semi-crystalline polymer independently selected from polyethylene, syndiotactic or isotactic polypropylene, polylactic acid, copolymer of ethylene with $C_3$-$C_{10}$ olefins, copolymer of propylene with ethylene or $C_4$-$C_{10}$ olefins, impact copolymer of propylene.

With preference, one or more of the following features can be used to further define the polymer composition of layer B according to the first aspect of the invention and/or the inventive use according to the second aspect of the invention:

- The polymer composition of layer B is a blend of the second amorphous polymer with one or more amorphous polymer selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof, with preference composition of layer B is a blend of the second amorphous polymer with the first amorphous polymer.

- The polymer composition of layer B is a blend of the second amorphous polymer with one or more amorphous polymer selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof, and with preference when the polymer composition is a blend of miscible polymers, the glass transition temperature Tg blend of the blend is higher than the glass transition temperature Tg1 of the first amorphous polymer.

- The content of amorphous polymers other than the second amorphous polymer in the polymer composition of layer B is at most 10 wt% as based on the total weight of the polymer composition, preferably at most 25 wt% more preferably at most 50 wt%, even more preferably at most 75 wt%.

- The polymer composition of layer B is a blend of the first amorphous polymer being selected from general purpose polystyrene (GPPS), high impact polystyrene (HIPS) and mixture thereof, and the second amorphous polymer being selected from acrylonitrile-butadiene-styrene (ABS), poly(p-phenylene ether) (PPE), styrene acrylonitrile (SAN) and mixture thereof.

- The content of the second amorphous polymer in the polymer composition of layer B is at least 25 wt% as based on the total weight of the polymer composition, preferably at least 30 wt% more preferably at least 50 wt%, even more preferably at least 60 wt%, most preferably at least 75 wt% and even most preferably at least 80 wt%.

- The polymer composition of layer B comprises up to 100 wt% of the second amorphous polymer as based on the total weight of the polymer composition.

- The polymer composition of layer B is devoid of any conductive materials, preferably is devoid of any conductive materials selected from the group comprising carbon nanotubes, carbon nanofibres, carbon black, metal fibres, metal powders and blends thereof, preferably from the group comprising carbon nanotubes, carbon nanofibres, carbon black, and blends thereof.

- The polymer composition of layer B is not foamed.

- The polymer composition of layer B is foamed and comprises at least 0.2 wt% of a blowing agent as based on the total weight of the polymer composition, the blowing agent being for example, hydrocerol or sodium bicarbonate.

- The polymer composition of layer B may comprise from 0.1 to 50 wt%, as based on the total weight of the composite material or the polymer composition respectively, of a semi-crystalline polymer independently selected from polyethylene, syndiotactic or isotactic polypropylene, polylactic acid, copolymer of ethylene with $C_3$-$C_{10}$ olefins, copolymer of propylene with ethylene or $C_4$-$C_{10}$ olefins, impact copolymer of propylene.

According to a third aspect, the invention provides a process to produce a multilayered sheet according to the first aspect, wherein the process comprises at least one of the following:

- a step of co-extrusion of at least one layer A and one layer B; and/or
- a step of blending and extruding in a single step the first amorphous polymer with a masterbatch comprising a conductive material and optionally with a styrenic copolymer; and/or
- a step of blending and extruding in a single step the second amorphous polymer, optionally with one or more amorphous polymer selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof.

According to a fourth aspect, the invention provides a thermoformed article made from a multilayered sheet as defined in the first aspect or made in accordance with the third aspect. With preference, the thermoformed article is selected from packaging containers for electronic devices, trays and carrier tapes.

According to a fifth aspect, the invention provides a process to produce a thermoformed article wherein the thermoformed article is produced by thermoforming a multilayered sheet as defined in the first aspect or made in accordance with the third aspect.

Multilayered sheet for thermoforming comprising a conductive surface layer comprising a blend of polystyrene and conductive material such as CNT are known from prior art. In particular, JP2014193560 discloses a multilayer sheet having a base material layer and a conductive layer. The conductive layer is containing a styrene-based resin. The base layer comprises ABS resin and carbon black. This document is silent about sagging behaviour. It is noted that the presence of carbon black reinforces the layer but represents also an additional cost. The multilayered sheet of the invention achieves a reduction of sagging in the absence of carbon black within the substrate layer.

EP1787804 describes a multilayered sheet comprising at least a substrate layer (A) made of polystyrene and ABS resin as main component, a reinforcing layer (B) made of an ABS resin as main component, and a surface layer (C) made of polystyrene and a conductive filler such as carbon black as main components. The document is silent about the sagging properties of the sheet. The aim of the presence of three layers having polymer composition different from each other is to improve the rigidity and the folding endurance of the sheet. In addition, the examples of EP1787804 describe the use of the ABS resin of the commercial grade SE-10 in the reinforcing layer and in the substrate layer, said ABS has a heat deflection temperature of 80 °C as determined in accordance with ISO 75-2/A (1.8 MPA). Moreover, EP1787804 reads that multilayered sheet, comprising only two kinds of polymer composition such as a surface layer and a substrate layer made of polystyrene and/or ABS resin as main components, have reduced shaping and mechanical properties. Thus, this teaching discourages the use of multilayered sheets comprising at most two kinds of layers.

JP 2003 103705 A discloses a multilayered sheet used as outer board of motor vehicles and comprising layers having specific heat deflection temperatures.

**Description of the drawings**

- Figure 1 is a scheme illustrating the sagging effect.
- Figure 2 is a picture used in the method of measurement of the sag value.

**Detailed description of the invention**

For the purpose of the invention the following definitions are given:

As used herein, a "polymer" is a polymeric compound prepared by polymerising monomers, whether of the same or a different type. The generic term polymer thus embraces the term homopolymer, usually employed to refer to polymers prepared from only one type of monomer, and the terms copolymer and interpolymer as defined below.

As used herein, a "copolymer", "interpolymer" and like terms mean a polymer prepared by the polymerization of at least two different types of monomers. These generic terms include polymers prepared from two or more different types of monomers, e.g. terpolymers, tetrapolymers, etc.

As used herein, "blend", "polymer blend" and like terms, refer to a polymer composition of two or more compounds, typically two or more polymers.

The term "amorphous polymer" indicates a polymer that, because of its constitution, is unable to crystallize, i.e. a polymer that is not a crystallisable polymer. The glass transition temperature in amorphous materials is the reversible transition from a hard and relatively brittle state into a molten or rubber-like state. The glass transition temperature of an amorphous polymer can be determined in accordance to ISO 11357-2:2013.

As used herein, the term "semi-crystalline" indicates a polymer in which some fractions remain un-crystallized or amorphous when the polymer is cooled to room temperature. In accordance with the invention, a semi-crystalline polymer is a polymer having a degree of crystallinity above 5%, preferably above 10%, as determined according to ASTM D3418-12. The melting temperature of a semi-crystalline polymer can be determined according to ISO 11357-3.

As used herein, the term "melt blending" involves the use of shear force, extensional force, compressive force, ultrasonic energy, electromagnetic energy, thermal energy or combinations comprising at least one of the foregoing forces or forms of energy and is conducted in processing equipment wherein the aforementioned forces are exerted by a single screw, multiple screws, intermeshing co-rotating or counter-rotating screws, non-intermeshing co-rotating or counter-rotating screws, reciprocating screws, screws with pins, barrels with pins, rolls, rams, helical rotors, or combinations comprising at least one of the foregoing.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

The particular features, structures, characteristics or embodiments may be combined in any suitable manner, as would be apparent to a person skilled in the art from this disclosure, in one or more embodiments.

The multilayered sheet

The invention provides a multilayered sheet comprising at least one layer of each of:

- a surface layer A comprising a composite material, wherein said composite material comprises a first amorphous polymer having a glass transition temperature Tg1 and from 0.05 wt% to 4.0 wt%, based on the total weight of the composite material, of a conductive material;
- a substrate layer B comprising a polymer composition, wherein said polymer composition comprises at least 10 wt% as based on the total weight of the polymer composition of a second amorphous polymer having a glass transition temperature Tg2, the glass transition temperature Tg2 of the second amorphous polymer being higher than the glass transition temperature Tg1 of the first amorphous polymer; the glass transition temperature being determined according to ISO 11357-2:2013; and wherein the second amorphous polymer has a heat deflection temperature of at least 85 °C as determined in accordance with ISO 75-2/A conditions 80 °C, 4H, 1.8 MPA, annealed;

and further wherein at least one of the outer layers is the surface layer A.

The multilayered sheet of the present invention contains at least one layer of each of the surface layer (layer A) and the substrate layer (layer B). Specifically, the following structures can be used:

(1) one or more layer A / one or more layer B:

(2) one or more layer A / one or more layer B / one or more layer A.

So that it is possible according to the invention that both of outer layers are the surface layer A. Preferably, the multilayered sheet comprises at most two kinds of layers being layer A and layer B. In other words the multilayered sheet according to the invention is devoid of a third type of layer different from layer A and layer B.

In order to adjust the thickness of a particular layer, the man skilled in the art may design the multilayered sheet in order to have several layers of the same type next to each other and may arrive at a construction of A-B-B-B-A for example, resulting in the thickness of layer B being greater than the thickness of layer A. Thus, the multilayered sheet according to the invention preferably comprises two or more layers B, wherein all layers B are made of the same polymer composition.

In an embodiment, when the structure (2) is considered, the layers A may have different thickness and/or different content in conductive materials.

In an embodiment, the thickness of the multilayered sheet is ranging from 500 to 3000 $\mu$m, with preference from 800 to 2000 $\mu$m.

In a preferred embodiment, the thickness of layer B is at least 2 times the thickness of layer A, preferably at least 3 times, more preferably at least 4 times even more preferably at least 5 times.

In a preferred embodiment, the structure of the multilayered sheet is A-B-A and the respective thickness ratio of the layers with the multilayered sheet is selected from 0.5:9:0.5, 1:8:1 or 2:6:2. Preferably, the respective thickness ratio of the layers is 1:8:1.

In a preferred embodiment, the multilayered sheet comprises from 0.05 to 1.6 % by weight of carbon nanotubes based on the total weight of the multilayered sheet as determined according to ISO 11358.

Preferably, the multilayered sheet comprises at least 0.08 wt% by weight of carbon nanotubes based on the total weight of the multilayered sheet as determined according to ISO 11358, more preferably at least 0.1 wt%, even more preferably at least 0.2 wt%, most preferably at least 0.3 wt%, even most preferably at least 0.4 wt% or at least 0.5 wt%.

Preferably, the multilayered sheet comprises at most 1.6 wt% by weight of carbon nanotubes based on the total weight of the multilayered sheet as determined according to ISO 11358, more preferably at most 1.2 wt%, even more preferably at most 1.0 wt%, most preferably at most 0.9 wt%, even most preferably at most 0.8 wt% or at most 0.7 wt%.

Sheets or films constituting the respective layers of the multilayered sheet of the present invention may be formed by a conventional method such as extrusion or calendering. The sheets or films for the respective layers are laminated to form any one of the above-mentioned layered structures (1) or (2) thereby to obtain the multilayered sheet of the present invention. The method for lamination is not particularly limited, and the sheets or films for the respective layers may sequentially be laminated by e.g. a hot lamination method, a dry lamination method and/or an extrusion lamination method, which is commonly employed. From an economical viewpoint, it is preferred to employ a multilayer co-extrusion method using a multi-manifold die or feed block to obtain a laminated composite sheet all at once.

In a preferred embodiment, the process to produce the multilayered sheet comprises a step of co-extrusion of at least one layer A and one layer B.

Preferably, the layer A is produced by the following steps:

- compounding the first amorphous polymer together with a masterbatch comprising the conductive material and optionally with a styrenic copolymer to produce a composite material; and
- extruding or co-extruding the composite material produced in the previous step to form layer A.

Alternatively, the layer A is produced in a single step comprising blending the first amorphous polymer together with a masterbatch comprising the conductive material and optionally with a styrenic copolymer in an extrusion device and extruding the blend to form layer A.

In a similar way, layer B is produced by the following steps:

- compounding the second amorphous polymer together with one or more amorphous polymer selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof, to produce a polymer composition; and
- extruding or co-extruding the polymer composition produced in the previous step to form layer B.

Alternatively, the layer B is produced in a single step comprising blending the second amorphous polymer together with one or more amorphous polymer selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof, to produce a polymer composition in an extrusion device and extruding the blend to form layer B.

Should the second amorphous polymer be the only amorphous polymer of the polymer composition of layer B, layer B is formed by extrusion or co-extrusion.

When the composition of layer A and/or layer B is produced by melt blending, melt blending may be conducted in machines such as, single or multiple screw extruders, Buss kneader, Eirich mixers, Henschel, helicones, Ross mixer, Banbury, roll mills, moulding machines such as injection moulding machines, vacuum forming machines, blow moulding machines, or the like, or combinations comprising at least one of the foregoing machines. It is generally desirable during melt or solution blending of the composition to impart a specific energy of about 0.01 to about 10 kilowatt-hour/kilogramme (kwhr/kg) of the composition. In a preferred embodiment, melt blending is performed in a twin screw extruder, such as a Brabender co-rotating twin screw extruder and/or a Leistritz extruder.

The amorphous polymers

The amorphous polymers considered by the invention for the first and second amorphous polymer are selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof.

In accordance with the invention, the glass transition temperature Tg2 of the second amorphous polymer is greater than the glass transition temperature Tg1 of the first amorphous polymer, the glass transition temperature being determined according to ISO 11357-2:2013.

In a preferred embodiment, the glass transition temperature Tg2 of the second amorphous polymer is at least 3 °C higher and preferably 5 °C higher than the glass transition temperature Tg1 of the first amorphous polymer, more preferably at least 10 °C greater.

In a preferred embodiment, the heat deflection temperature of the second amorphous polymer is at least 5 °C higher than the heat deflection temperature of the first amorphous polymer, the heat deflection temperature being determined according to ISO 75-2/A conditions 80 °C, 4H, 1.8 MPA, annealed, preferably at least 8 °C higher, more preferably at least 10 °C higher and even more preferably at least 12 °C higher.

The heat deflection temperature of the polymer composition of layer B is at least 3.5 °C higher than the heat deflection temperature of the first amorphous polymer, the heat deflection temperature being determined according to ISO 75-2/A conditions 80 °C, 4H, 1.8 MPA, annealed, preferably at least 5 °C higher, more preferably at least 8 °C higher, and even more preferably at least 10 °C higher.

Thus, the choice of the second amorphous polymer is correlated to the choice of the first amorphous polymer. The higher is the difference between the heat deflection temperature of the first and the second amorphous polymer, or between the composite material of layer A and the polymer composition of layer B, the more the sagging behaviour is improved.

For example, if the person skilled in the art is producing a layer A comprising a first amorphous polymer and a layer B comprising a blend of the first amorphous polymer and a second amorphous polymer, with the second amorphous polymer having a HDT higher than 85°C, further improvement in sagging (i.e. less sagging) may be achieved by increasing the content of the second amorphous polymer in the blend.

Also, if the person skilled in the art is producing a layer A comprising a first amorphous polymer and a layer B comprising a second amorphous polymer, further improvement in sagging (i.e. less sagging) may be achieved by selecting another second amorphous polymer with an higher HDT.

In a preferred embodiment, the first amorphous polymer is selected from general purpose polystyrene (GPPS), high impact polystyrene (HIPS), acrylonitrile-butadiene-styrene (ABS) and mixture thereof. Preferably, the first amorphous polymer is a polystyrene selected from general purpose polystyrene (GPPS), high impact polystyrene (HIPS) and mixture thereof.

The polystyrenes may be prepared by a number of methods well known to those skilled in the art. An example of a method to produce polystyrene is given in EP2401311. An example of a method to produce high impact polystyrene (HIPS) is given in US2012/0289656. Polystyrene in form of GPPS or HIPS are commercially available. Polystyrene is known to have a glass transition temperature ranging from about 95 to 105 °C in most of the cases. Thus, if polystyrene is chosen as the first amorphous polymer, the second amorphous polymer may be chosen to have a glass transition temperature greater than 105 °C, preferably greater than 110 °C.

In a preferred embodiment, the second amorphous polymer is selected from acrylonitrile-butadiene-styrene (ABS), poly(p-phenylene ether) (PPE), styrene acrylonitrile (SAN) and mixture thereof. ABS, PPE and SAN are commercially available. ABS is known to have a glass transition temperature ranging from 105 °C to 115 °C. PPE may have a glass transition temperature of 215 °C. SAN may have a glass transition temperature of 106 °C. PPE and SAN are known to be miscible with polystyrene.

In a blend of two miscible amorphous polymers, the glass transition temperature of the blend Tg blend complies with the Fox equation (1):

$$\frac{1}{\text{Tg blend}} = \frac{wi}{\text{Tgi}} + \frac{wii}{\text{Tgii}} + \cdots \qquad (1)$$

Wherein:

- Tgi and Tgii are the respective glass transition temperature of the different amorphous polymers present in the blend;

- wi and wii are the respective weight fractions of the different amorphous polymers present in the blend.

ABS and HIPS are not miscible thus that the Tg of the blend should be determined experimentally.

The composite material of layer A

According to the invention, the composite material of layer A comprises a first amorphous polymer as defined above and having a glass transition temperature Tg1 and from 0.05 wt% to 4.0 wt% as based on the total weight of the composite material, of a conductive material. Should the composite material comprises a blend of two or more amorphous polymer, the glass transition temperature to be considered in accordance with the invention is the resulting glass transition temperature of the blend.

In a preferred embodiment, the first amorphous polymer is selected from general purpose polystyrene (GPPS), high impact polystyrene (HIPS), acrylonitrile-butadiene-styrene (ABS) and mixture thereof. Preferably, the first amorphous polymer is a polystyrene selected from general purpose polystyrene (GPPS), high impact polystyrene (HIPS) and mixture thereof.

Preferably, the first amorphous polymer has a melt flow index of at least 1 g/10 min as determined according to ISO 1133 conditions H under a load of 5 kg at a temperature of 200 °C, preferably of at least 1.5 g/10 min, more preferably of at least 2.0 g/10 min and most preferably of at least 2.5 g/10 min.

In another preferred embodiment, the first amorphous polymer has a melt flow index of at most 10 g/10 min as determined according to ISO 1133 conditions H under a load of 5 kg at a temperature of 200 °C, preferably of at most 5.0 g/10 min, more preferably of at most 4.0 g/10 min and most preferably of at most 3.5 g/10 min.

The conductive material in the composite material of layer A is selected from the group comprising carbon nanotubes, carbon nanofibres, carbon black, metal fibres, metal powders and blends thereof, preferably from the group comprising carbon nanotubes, carbon nanofibres, carbon black, and blends thereof, more preferably the conductive material is carbon nanotubes.

Suitable carbon nanotubes used in the present invention can generally be characterised by having a size from 1 nm to 500 nm. This definition of size can be limited to two dimensions only, i.e. the third dimension may be outside of these limits.

Suitable carbon nanotubes also referred to as "nanotubes" herein, can be cylindrical in shape and structurally related to fullerenes, an example of which is Buckminster fullerene ($C_{60}$). Suitable carbon nanotubes may be open or capped at their ends. The end cap may for example be a Buckminster-type fullerene hemisphere. Suitable carbon nanotubes used in the present invention can comprise more than 90% of their total weight in carbon, more preferably more than 95%, even more preferably more than 99% and most preferably more than 99.9%. However, minor amounts of other atoms may also be present.

Suitable carbon nanotubes to be used in the present invention can be prepared by any method known in the art. Carbon nanotubes can exist as single-walled nanotubes (SWNT) and multi-walled nanotubes (MWNT), i.e. carbon nanotubes having one single-wall and nanotubes having more than one wall, respectively. In single-walled carbon nanotubes a one atom thick sheet of atoms, for example, a one-atom thick sheet of graphite (also called graphene), is rolled seamlessly to form a cylinder. Multi-walled carbon nanotubes consist of a number of such cylinders arranged concentrically. The arrangement in multi-walled carbon nanotubes can be described by the so-called Russian doll model, wherein a larger doll opens to reveal a smaller doll.

In an embodiment, the carbon nanotubes are multi-walled carbon nanotubes, more preferably multi-walled carbon nanotubes having on average from 5 to 15 walls.

Carbon nanotubes, irrespectively of whether they are single-walled or multi-walled, may be characterised by their outer diameter or by their length or by both.

Single-walled carbon nanotubes are preferably characterised by an outer diameter of at least 0.5 nm, more preferably of at least 1 nm, and most preferably of at least 2 nm. Preferably their outer diameter is at most 50 nm, more preferably at most 30 nm and most preferably at most 10 nm. Preferably, the length of single-walled nanotubes is at least 0.1 μm, more preferably at least 1 μm, even more preferably at least 10 μm. Preferably, their length is at most 50 mm, more preferably at most 25 mm.

Multi-walled carbon nanotubes are preferably characterised by an outer diameter of at least 1 nm, more preferably of at least 2 nm, 4 nm, 6 nm or 8 nm, and most preferably of at least 10 nm. The preferred outer diameter is at most 100 nm, more preferably at most 80 nm, 60 nm or 40 nm, and most preferably at most 20 nm.

Preferred carbon nanotubes are carbon nanotubes having a surface area of 200-400 $m^2/g$ (measured by Brunauer-Emmett-Teller (BET) method).

Non-limiting examples of commercially available multi-walled carbon nanotubes are Graphistrength™ 100, available from Arkema, Nanocyl™ NC 7000 available from Nanocyl, FloTube™ 9000 available from CNano Technology, Baytubes® C 150 B available from Bayer Material Science.

In a preferred embodiment, the composite material of layer A comprises from 0.05 to 4.0% by weight of carbon nanotubes based on the total weight of the composite material as determined according to ISO 11358.

In a preferred embodiment, the composite material of layer A has a surface resistivity of at most $1 \times 10^8$ Ohm/sq, preferably at most $1 \times 10^6$ Ohm/sq as determined according to CEI 60167.

The process to obtain a suitable composite material is described in WO2015014897.

The process can also be described as comprising the steps of:

- providing a masterbatch comprising an amorphous polymer and at least 5 %, and preferably from 5 % to 15 %, by weight of conductive material, preferably carbon nanotubes based on the total weight of the masterbatch as determined according to ISO11358, and wherein the amorphous polymer has a melt flow index MFI of at least 10 g/10 min determined according to ISO 1133;
- providing a first amorphous polymer having a glass transition temperature Tg1;
- blending together the masterbatch and the first amorphous polymer by extrusion in an extruder at a barrel temperature ranging from Tg1+100 °C to Tg1+200 °C, preferably ranging from Tg1+120 °C to Tg1+180 °C,

the glass transition temperature being determined according to ISO 11357-2:2013.

A masterbatch suitable for the invention can be obtained as described in WO2015014897.

The process to produce such masterbatch can also be described as comprising the steps of:

- providing a conductive material, preferably carbon nanotubes;
- providing an amorphous polymer, said amorphous polymer having a glass transition temperature Tg, and a melt flow index MFI of at least 10 g/10 min determined at 200 °C under a load of 5 kg according to ISO 1133 H, and optionally from 0.01 to 4.0 by weight of one or more additive based on the total weight of the masterbatch, the one or more additive being selected from waxes, tristearin, zinc stearate, calcium stearate, magnesium stearate, erucyl amide, oleic acid amide, ethylene-acrylic acid copolymer, ethylene vinyl acetate copolymer and cetyl trimethyl ammonium bromide;

- blending together said conductive material, preferably carbon nanotubes, and said amorphous polymer by extrusion in an extruder at a barrel temperature ranging from Tg to Tg +80 °C, preferably from Tg +5 °C to Tg + 50 °C;

the glass transition temperature being determined according to ISO 11357-2:2013.

Preferably, the step of blending together said conductive material, being preferably carbon nanotubes, and said amorphous polymer by extrusion is conducted on co-rotating twin screw extruder at a screw speed of at least 250 rpm, with preference at least 300 rpm, with preference at least 500 rpm.

Preferably the step of providing conductive material, preferably carbon nanotubes, comprises selecting the quantity of conductive material, preferably carbon nanotubes, to be blended with the first amorphous polymer in order to obtain a masterbatch comprising at least 5%, and preferably from 5 % to 15 %, by weight of conductive material based on the total weight of the masterbatch, the conductive material being preferably carbon nanotube and its content is determined according to ISO 11358.

Preferably, the masterbatch has a surface resistance of at most $10^2$ Ohm as determined according to ASTM D257, and/or high load melt flow index HLMI1 of less than 20 g/10 min determined under a load of 21.6 kg according to ISO 1133.

With preference, the amorphous polymer used in the masterbatch is selected from general purpose polystyrene (GPPS), high impact polystyrene (HIPS), acrylonitrile-butadiene-styrene (ABS) and mixture thereof. More preferably, the amorphous polymer used in the masterbatch is a polystyrene selected from general purpose polystyrene (GPPS), high impact polystyrene (HIPS) and mixture thereof.

Preferably, the composite material has a surface resistivity of at most $5x10^3$ Ohm/sq, with preference at most $4x10^3$ Ohm/sq. The resistivity can be measured using the method described in ASTM- D257.

In an embodiment, the composite material comprises at most 3.50 % by weight of carbon nanotubes based on the total weight of the composite material, for example at most 3.00 wt%, for example at most 2.50 wt%, for example at most 2.00 wt%, for example at most 1.95 wt%, for example at most 1.50 wt%, for example at most 1.40 wt%, for example at most 1.25 wt%, for example at most 1.00 wt%, for example at most 0.90 wt%.

In another embodiment, the composite material according to the invention comprises at least 0.05%, preferably at least 0.10% by weight of carbon nanotubes, relative to the total weight of the composite material. For example, the composite material of the present invention can comprise at least 0.30 % by weigh of carbon nanotubes based on the total weight of the composite material, for example at least 0.40 wt%, for example at least 0.45 wt%, preferably at least 0.50 wt%, preferably at least 0.55 wt%, more preferably at least 0.60 wt%, more preferably at least 0.65 wt%, most preferably at least 0.70 wt%.

In a preferred embodiment, the composite material comprises from 1.00 to 3.50 % by weight of carbon nanotubes based on the total weight of the composite material, preferably from 1.50 to 3.00 wt%.

The composite material may further comprise a styrenic copolymer, preferably wherein the styrenic copolymer is selected from styrene-butadiene-styrene block copolymer (SBS) or styrene-ethylene-butadiene-styrene block copolymer (SEBS).

In an embodiment, the content of the styrenic copolymer in the composite material is at least 0.01 wt% as based on the total weight of the composite material, preferably at least 1 wt%, more preferably at least 5 wt%, even more preferably at least 10 wt% and most preferably at least 15 wt%.

In an embodiment, the content of the styrenic copolymer in the composite material is at most 50 wt% as based on the total weight of the composite material, preferably at most 40 wt%, more preferably at most 35 wt%, even more preferably at most 30 wt% and most preferably at most 25 wt%.

Preferably, the styrenic copolymer is a styrenic block copolymer. Suitable styrenic block copolymers include at least two mono-alkenyl arene blocks, preferably two polystyrene blocks, separated by a block of a saturated conjugated diene, such as a saturated polybutadiene block. Suitable unsaturated block copolymers include, but are not limited to, those represented by the following formulas: A'-B'-R(-B'-A')$_n$ or A'$_x$-(B'A'-)$_y$-B'A' wherein each A' is a polymer block comprising a vinyl aromatic monomer, such as styrene, and each B' is a polymer block comprising a conjugated diene, such as isoprene or butadiene, and optionally a vinyl aromatic monomer, such as styrene; R is the remnant of a multifunctional coupling agent (if R is present, the block copolymer can be a star or branched block copolymer); n is an integer from 1 to 5; x is zero or 1; and y is a real number from 0 to 4.

The composite material may further comprise a semi-crystalline polymer independently selected from the group consisting of polyethylene, syndiotactic or isotactic polypropylene, polylactic acid, polyamide, ethyl-vinyl acetate homopolymer or copolymer, polyurethane, copolymer of ethylene with $C_3$-$C_{10}$ olefins, copolymer of propylene with ethylene or $C_4$-$C_{10}$ olefins, impact copolymer of propylene, polyetheretherketone, polyoxymethylene, syndiotactic polystyrene (SPS), polyphenylene sulfide (PPS), liquid crystalline polymer (LCP), homo- and copolymer of butene, homo- and copolymer of hexene; preferably the semi-crystalline polymer is independently selected from polyethylene, syndiotactic or isotactic polypropylene, polylactic acid, copolymer of ethylene with $C_3$-$C_{10}$ olefins, copolymer of propylene with ethylene or $C_4$-$C_{10}$ olefins, impact copolymer of propylene.

In an embodiment, the content of the semi-crystalline polymer in the composite material is at least 0.01 wt% as based on the total weight of the composite material, preferably at least 1 wt%, more preferably at least 5 wt%, even more preferably at least 10 wt% and most preferably at least 15 wt%.

In an embodiment, the content of the semi-crystalline polymer in the composite material is at most 50 wt% as based on the total weight of the composite material, preferably at most 40 wt%, more preferably at most 35 wt%, even more preferably at most 30 wt% and most preferably at most 25 wt%.

The polymer composition of layer B

In a preferred embodiment, the polymer composition of layer B comprises a single amorphous polymer being the second amorphous polymer as defined above.

Preferably, the second amorphous polymer has a heat deflection temperature of at least 88 °C as determined in accordance with ISO 75-2/A conditions 80 °C, 4H, 1.8 MPA, annealed, preferably at least 90 °C, more preferably at least 92 °C.

In an embodiment, the second amorphous polymer has a melt volume rate ranging from 1 to 10 cm$^3$/10 min as determined according to ISO 1133 under a load of 10 kg at a temperature of 220 °C. Preferably, the second amorphous polymer has a melt volume rate of at least 2 cm$^3$/10 min as determined according to ISO 1133 under a load of 10 kg at a temperature of 220 °C, preferably of at least 3 cm$^3$/10 min, more preferably of at least 4 cm$^3$/10 min and most preferably of at least 5 cm$^3$/10 min. Preferably, the second amorphous polymer has a melt volume rate of at most 9 cm$^3$/10 min as determined according to ISO 1133 under a load of 10 kg at a temperature of 220 °C, preferably of at most 8 cm$^3$/10 min, more preferably of at most 7 cm$^3$/10 min and most preferably of at most 6 cm$^3$/10 min.

In another embodiment, the polymer composition of layer B is a blend of the second amorphous polymer with one or more amorphous polymer selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof, with preference polymer composition of layer B is a blend of the second amorphous polymer with the first amorphous polymer. So that, the polymer composition of layer B is a blend of the first amorphous polymer being selected from general purpose polystyrene (GPPS), high impact polystyrene (HIPS) and mixture thereof, and the second amorphous polymer being selected from acrylonitrile-butadiene-styrene (ABS), poly(p-phenylene ether) (PPE), styrene acrylonitrile (SAN) and mixture thereof.

In an embodiment, the polymer composition of layer B is a blend of the second amorphous polymer with one or more amorphous polymer selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof, wherein the one or more amorphous polymer is different from the first amorphous polymer. In such a case the one or more amorphous polymers are selected to be miscible with the second amorphous polymer, and are added in suitable proportions so that the glass transition temperature Tg blend of the blend is higher than the glass transition temperature Tg1 of the first amorphous polymer.

Whatever the polymer composition comprises the first amorphous polymer or another one, the content of the second amorphous polymer in the polymer composition of layer B is at least 10 wt% as based on the total weight of the polymer composition. With preference, the content of the second amorphous polymer in the polymer composition of layer B is at least 25 wt%, preferably at least 30 wt%, more preferably at least 50 wt%, even more preferably at least 60 wt%, most preferably at least 75 wt% and even most preferably at least 80 wt%.

With preference, the polymer composition of layer B comprises up to 100 wt% of the second amorphous polymer as based on the total weight of the polymer composition.

In another embodiment, the content of the amorphous polymer other than the second amorphous polymer in the polymer composition of layer B is at most 90 wt%, based on the total weight of the polymer composition, preferably at most 80 wt%, more preferably at most 75 wt%, more preferably at most 50 wt% more preferably at most 25 wt%, even more preferably at most 10 wt%.

The polymer composition may further comprise a semi-crystalline polymer independently selected from the group consisting of polyethylene, syndiotactic or isotactic polypropylene, polylactic acid, polyamide, ethyl-vinyl acetate homopolymer or copolymer, polyurethane, copolymer of ethylene with $C_3$-$C_{10}$ olefins, copolymer of propylene with ethylene or $C_4$-$C_{10}$ olefins, impact copolymer of propylene, polyetheretherketone, polyoxymethylene, syndiotactic polystyrene (SPS), polyphenylene sulfide (PPS), liquid crystalline polymer (LCP), homo- and copolymer of butene, homo- and copolymer of hexene; preferably the semi-crystalline polymer is independently selected from polyethylene, syndiotactic or isotactic polypropylene, polylactic acid, copolymer of ethylene with $C_3$-$C_{10}$ olefins, copolymer of propylene with ethylene or $C_4$-$C_{10}$ olefins, impact copolymer of propylene.

In an embodiment, the content of the semi-crystalline polymer in the polymer composition is at least 0.01 wt% as based on the total weight of the composite material, preferably at least 1 wt%, more preferably at least 5 wt%, even more preferably at least 10 wt% and most preferably at least 15 wt%.

In an embodiment, the content of the semi-crystalline polymer in the polymer composition is at most 50 wt% as based on the total weight of the composite material, preferably at most 40 wt%, more preferably at most 35 wt%, even more preferably at most 30 wt% and most preferably at most 25 wt%.

Presence of additives in the layers

In an embodiment of the invention, the composite material of layer A and/or the polymer composition of layer B comprises one or more additives selected from the group comprising an antioxidant, an anti-acid, a UV-absorber, an antistatic agent, a light stabilizing agent, an acid scavenger, a lubricant, a nucleating/clarifying agent, a colorant or a peroxide. An overview of suitable additives may be found in Plastics Additives Handbook, ed. H. Zweifel, 5th edition, 2001, Hanser Publishers, which is hereby incorporated by reference in its entirety.

The invention also encompasses the composite material and/or the polymer composition as described herein wherein the composite material comprises from 0% to 10% by weight of at least one additive such as antioxidant, based on the total weight of the composite material. In a preferred embodiment, said composite material comprises less than 5% by weight of additives, based on the total weight of the composite material, for example from 0.1 to 3% by weight of additives, based on the total weight of the composite material.

In an embodiment, the composite material and/or the polymer composition comprises an antioxidant. Suitable antioxidants include, for example, phenolic antioxidants such as pentaerythritol tetrakis[3-(3',5'-di-tert-butyl-4'-hydroxyphenyl)propionate] (herein referred to as Irganox 1010), tris(2,4-ditert-butylphenyl) phosphite (herein referred to as Irgafos 168), 3DL-alpha-tocopherol, 2,6-di-tert-butyl-4-methylphenol, dibutylhydroxyphenylpropionic acid stearyl ester, 3,5-di-tert-butyl-4-hydroxyhydrocinnamic acid, 2,2'-methylenebis(6-tert-butyl-4-methyl-phenol), hexamethylene bis[3-(3,5-di-tert-butyl-4-hydroxyphenyl)propionate], benzenepropanamide,N,N'-1,6-hexanediyl bis[3,5-bis(1,1-dimethylethyl)-4-hydroxy] (Antioxidant 1098), Diethyl 3,5-di-tert-butyl-4-hydroxybenzyl phosphonate, Calcium bis[monoethyl(3,5-di-tert-butyl-4-hydroxylbenzyl)phosphonate], Triethylene glycol bis(3-tert-butyl-4-hydroxy-5-methylphenyl)propionate (Antioxidant 245), 6,6'-di-tert-butyl-4,4'-butylidenedi-m-cresol, 3,9-bis(2-(3-(3-tert-butyl-4-hydroxy-5-methylphenyl)propionyloxy-1,1-dimethylethyl)-2,4,8,10-tetraoxaspiro[5.5]undecane, 1,3,5-trimethyl-2,4,6-tris(3,5-di-tert-butyl-4-hydroxybenzyl)benzene, 1,1,3-tris(2-methyl-4-hydroxy-5-tert-butylphenyl)butane, (2,4,6-trioxo-1,3,5-triazine-1,3,5(2H,4H,6H)-triyl)triethylene tris[3-(3,5-di-tert-butyl-4-hydroxyphenyl)propionate], tris(3,5-di-tert-butyl-4-hydroxybenzyl) isocyanurate, Tris(4-tert-butyl-3-hydroxy-2,6-dimethylbenzyl) isocyanurate, ethylene bis[3,3-bis(3-tert-butyl-4-hydroxyphenyl)butyrate], and 2,6-bis[[3-(1,1-dimethylethyl)-2-hydroxy-5-methylphenyl] octahydro-4,7-methano-1H-indenyl]-4-methyl-phenol. Suitable antioxidants also include, for example, phenolic antioxidants with dual functionality such 4,4'-Thio-bis(6-tert-butyl-m-methyl phenol) (Antioxidant 300), 2,2'-Sulfanediylbis(6-tert-butyl-4-methylphenol) (Antioxidant 2246-S), 2-Methyl-4,6-bis(octylsulfanylmethyl)phenol, thiodiethylene bis[3-(3,5-di-tert-butyl-4-hydroxyphenyl)propionate], 2,6-di-tert-butyl-4-(4,6-bis(octylthio)-1,3,5-triazin-2-ylamino)phenol, N-(4-hydroxyphenyl)stearamide, bis(1,2,2,6,6-pentamethyl-4-piperidyl) [[3,5-bis(1,1-dimethylethyl)-4-hydroxyphenyl]methyl]butylmalonate, 2,4-di-tert-butylphenyl 3,5-di-tert-butyl-4-hydroxybenzoate, hexadecyl 3,5-di-tert-butyl-4-hydroxy-benzoate, 2-(1,1-dimethylethyl)-6-[[3-(1,1-dimethylethyl)-2-hydroxy-5-methylphenyl] methyl]-4-methylphenyl acrylate, and Cas nr. 128961-68-2 (Sumilizer GS). Suitable antioxidants also include, for example, aminic antioxidants such as N-phenyl-2-naphthylamine, poly(1,2-dihydro-2,2,4-trimethyl-quinoline), N-isopropyl-N'-phenyl-p-phenylenediamine, N-Phenyl-1-naphthylamine, CAS nr. 68411-46-1 (Antioxidant 5057), and 4,4-bis(alpha,alphadimethylbenzyl)diphenylamine (Antioxidant KY 405). Preferably, the antioxidant is selected from pentaerythritol tetrakis[3-(3',5'-di-tert-butyl-4'-hydroxyphenyl)propionate] (herein referred to as Irganox 1010), tris(2,4-ditert-butylphenyl) phosphite (herein referred to as Irgafos 168), or a mixture thereof.

The articles

The invention also encompasses thermoformed articles selected from packaging containers for electronic devices, trays and carrier tapes. With preference, the articles are produced by thermoforming a multilayered sheet as defined above.

The present invention can be further illustrated by the following examples, although it will be understood that these examples are included merely for purposes of illustration and are not intended to limit the scope of the invention unless otherwise specifically indicated.

## EXAMPLES

### Test methods

**The content of carbon nanotubes** in percentage by weight in blends (% CNT) can be determined by thermal gravimetric analysis (TGA) according to ISO 11358, using a Mettler Toledo STAR TGA/DSC 1 apparatus. Prior to the determination of the content of carbon nanotubes in % by weight in blends (% CNT), the carbon content of the carbon nanotubes in % by weight (%C-CNT) was determined as follows: 2 to 3 milligrams of carbon nanotubes were placed into a TGA. The material was heated at a rate of 20 °C/min from 30 °C to 600 °C in nitrogen (100 ml/min). At 600 °C, the gas was switched to air (100 ml/min), and the carbon oxidised, yielding the carbon content of the carbon nanotubes in % by weight (% C-CNT). The % C-CNT value was the average of 3 measurements. For the content of carbon nanotubes % by weight in blends (% CNT), 10 to 20 milligrams of the samples were placed into a TGA. The material was heated at a rate of 20 °C/min from 30 °C to 600 °C in nitrogen (100 ml/min). At 600 °C, the gas was switched to air (100 ml/min), and the carbon oxidised, yielding to the carbon content of carbon nanotubes in the sample (% C-sample). The % C-sample value was the average of 3 measurements. The content of carbon nanotubes in % by weight in sample (% CNT) was then determined by dividing the carbon content of carbon nanotubes in % by weight in sample (% C-sample) by the carbon content of the carbon nanotubes in % by weight (% C-CNT) and multiplying by 100.

$$\% \text{ CNT} = \% \text{ C-sample} / \% \text{ C-CNT} * 100$$

**The surface resistivity** (SR) of the blend was measured using a 2410 SourceMeter® apparatus. Conditions which were used were similar to those described in the CEI 60167 and NF C26-215 test methods. The surface resistivity (SR) was measured on 2 mm thick compression moulded plaque at 200 °C during 12 minutes. The resistance measurement was performed using an electrode system made of two conductive paint lines using silver ink and an adhesive mask presenting 2 parallel slits 25 mm long, 1 mm wide and 2mm apart. The samples were conditioned at 23 °C/50 % RH for minimum 4 hours before running the test. The measure of the resistance in Ohm was reported to a square measurement area and expressed in ohm/square using the following equation: $SR = (R \times L) / d$, wherein: SR is the average resistance reported to a square measurement area, conventionally called surface resistivity (expressed in ohm/sq), R is the average of the resistance measurements (Ohm), L is the paint line length (cm), d is the distance between the electrodes (cm). L = 2.5 cm and d = 0.2 cm and SR = R x 12.5. The surface resistivity (SR) value was the average of 3 measurements.

**The surface resistance/resistivity ($R_S$, $\rho_S$)** measured according to ASTM D-257 was done using a 2410 SourceMeter® apparatus using silver paint electrodes (made of two conductive paint lines using silver ink and an adhesive mask presenting 2 parallel slits 25 mm long, 1 mm wide and 2mm apart). Measurements were done either on 2 mm thick compression molded plaque (at 200 °C for polystyrene-based samples or 230 °C for polyethylene-based samples) during 12 minutes, on extruded sheet or on injected sample. Measures of surface resistance were reported in Ohm ($\Omega$) and converted to surface resistivity in Ohm/square ($\Omega$/sq) using the following equation: $\rho_S = (R_S \times L) / d$, wherein: L is the paint line length (cm), d is the distance between the electrodes (cm).

**The melt flow index** was determined, for polystyrene, under a load of 5 kg at a temperature of 200 °C according to ISO 1133 H,

**The melt volume rate** was determined for ABS under a load of 10 kg at a temperature of 220 °C according to ISO 1133.

**The high melt flow index (HLMI)** was determined under a load of 21.6 kg at a given temperature (200 °C for polystyrene, etc.) according to ISO 1133.

**The glass transition temperature** was determined by the method according to ISO 11357-2:2013.

**The Heat Deflection Temperature** (HDT) was determined in accordance with ISO 75-2/A conditions 80°C, 4H, 1.8 MPA, annealed.

**The sag value** (p) was determined on sheets having a thickness of 1 mm and a size of 15 x 20 cm. Each sheet was heated in a IR ceramic heater between two ceramic plates that were each disposed at 10 cm of the multi-layered sheet. The ceramic plates were heated at a temperature Tr of 400°C. The sheet is then introduced IR ceramic heater and is heated for a period of time Tc ranging from 74 to 76 seconds. The process is followed by a camera. At the end of Tc a picture is taken and the sheet is taken out of the IR ceramic heater. The surface temperature $T_{SF}$ is then measured with an IR sensor. The measurement of the sag value is determined on the picture taken just before the sheet is taken out of the oven, the scale is given by the thickness e of the frame holding the sheet with e = 10 mm.

### Examples:

The following examples illustrate the invention.

**Example 1:** influence on sagging of the content of the second amorphous polymer of the polymer composition of layer B

Used materials:

Layer A was produced by blending and extruding in a single step:

- HIPS (high impact polystyrene) having a MFI of 2.8 g/10 min in accordance to ISO 1133H, a glass transition temperature Tg of 101 °C and a heat deflection temperature of 78.2 °C, commercially available from Total as the commercial grade HIPS 8260.
- Masterbatch of Polystyrene containing 10 % of carbon nanotubes from Nanocyl
- SBS (styrene butadiene styrene copolymer) commercial grade BASF 3G55.

Layer B was produced by blending and extruding in a single step:

- ABS (acrylonitrile-butadiene-styrene) HI10 from styrolution (commercial grade) having a melt volume rate of 5.5 cm$^3$ /10 min in accordance with ISO 1133, a glass transition temperature Tg of 110 °C, and a heat deflection temperature of 93.0 °C.
- Optionally HIPS (high impact polystyrene) having a MFI of 2.8 g/10 min in accordance to ISO 1133H and a heat deflection temperature of 78.2 °C (Total commercial grade HIPS 8260).

Used machineries:

- 3 Collin single screws extruders attached together to a cassette rack providing 5 channels of melt pushed to a 250mm flat die with adjustable lips made by Verbruggen. This layout gives A-B-B-B-A layers. The B layers are containing the same material but coming from two different screws: outers B is 30 mm diameter screw while middle B is a 20 mm diameter screw.

The A layer is the external conductive layer produced with the help of a 30 mm diameter screw assembled with a maddock mixing element + a pineapple mixing element at the end.
Belong to this, there is a small gear pump (13 mm diameter) creating an increased pressurization of the melt (200 bars) to perform a correct blend; that means the different components (pellets) are pre- mixed in a plastic bag and shacked manually during few minutes (dry blend of 10kg per batch).
All three extruders get a gravimetric hopper from INOEX to control each throughput to obtain the desired thickness layers.

- Collin vertical calenders 3 rolls chrome polished (160 mm diameter x 400 mm) thermally adjustable and nip gap controlled by mechanical end stroke devices.

- A unique thermoforming machine (ALM brand) capable to use one sheet 16x16cm at a time. A processor is joined, capable to record every millisecond all parameters of the process like temperatures, speeds, pressures, delays, end strokes, cycle time, etc.

For this test, the samples were only reheat without forming piece, the goal was to measure the sag created during the heating time in the oven.
This oven is composed of ceramics heaters placed 10cm from the sheet above and bottom side. More, there are two separate zones controlled by a thermocouple each who allows differentiating the center zone from the external one, gives a total of 4 separate zones to set.

- A thermal camera able to take pictures in real colours to evaluate the sag at the end of the heating process.

Procedure and results

The thickness distribution A/B/A is in range like 1/8/1 for 1000 μm total thickness.
The sheets were made at 18 kg/h and 220 °C melt temperature; the calenders were at 85 °C and running at 1.3 m/min.
Surface resistivity was measured on both faces of the sheets and were always at 10^4-5 Ohms

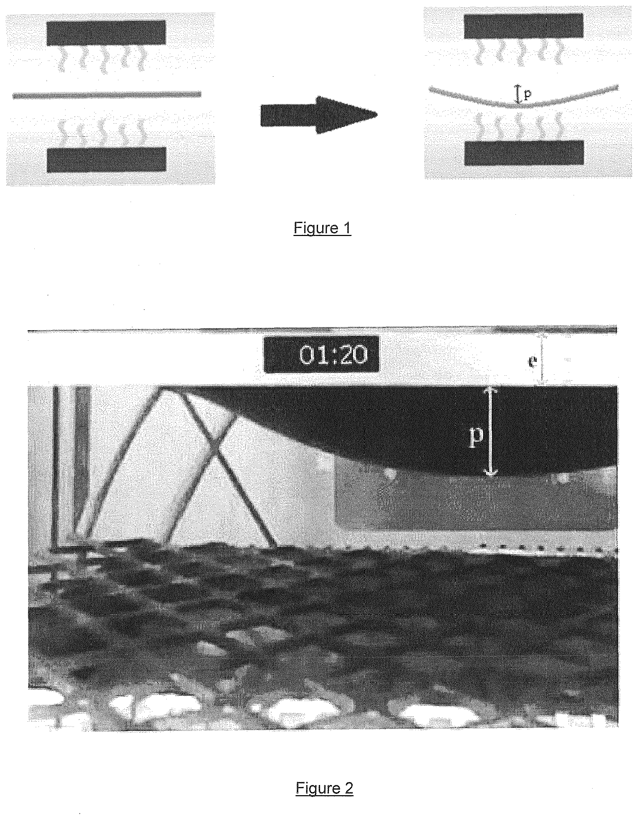

The sag value was directly measured by an optical device as shown on figures 1 and 2 wherein p is the sag value, the measurements were rounded.

Table 1:

| | CE1 | E1 | E2 | E3 | E4 |
|---|---|---|---|---|---|
| **Layer A composition** | | | | | |
| MB (wt%) | 30 | 30 | 30 | 30 | 30 |
| SBS (wt%) | 20 | 20 | 20 | 20 | 20 |
| HIPS (wt%) | 50 | 50 | 50 | 50 | 50 |
| **Layer B composition** | | | | | |
| HIPS (wt%) | 100 | 75 | 50 | 25 | 0 |
| ABS (wt%) | 0 | 25 | 50 | 75 | 100 |
| **Process conditions** | | | | | |
| Heating time Tc (seconds) | 76 | 76 | 74 | 74 | 74 |
| Top side surface sheet temperature $T_{SF}$ (°C) | 217 | 214 | 212 | 210 | 210 |
| **Results** | | | | | |
| Sag value (mm) | 15 | 8 | 4 | 4 | 2 |

CE1 is a comparative example as layer B only contains HIPS. In inventive examples E1 to E3, various content of ABS in the B layer have been tested. In E4 layer B only contains ABS. From the results, it can be clearly seen a diminution of sagging correlated to the presence of ABS in layer B and the increase of this content.

**Example 2:** influence on sagging of the HDT of the second amorphous polymer of the polymer composition of layer B

Influence of the choice of the second polymer was tested. A new sheet CE2 was produced with the same conditions than sheet E1, with exception that the HDT of the ABS used in layer B was 80 °C whereas E1 was produced with an ABS selected to have an HDT of 93 °C in layer B. In both cases, the Tg2 of the second polymer was higher than the Tg1 of the first polymer.

The results displayed on table 2 showed an improvement of sagging properties correlated with the increase of the HDT of the second amorphous polymer.

Table 2:

| | CE2 | E1 |
|---|---|---|
| **Layer A composition** | | |
| MB (wt%) | 30 | 30 |
| SBS (wt%) | 20 | 20 |
| HIPS (wt%) | 50 | 50 |
| **Layer B composition** | | |
| HIPS (wt%) | 75 | 75 |
| ABS (wt%) | 25 | 25 |
| **Process conditions** | | |
| Heating time Tc (seconds) | 76 | 76 |
| Top side surface sheet temperature $T_{SF}$ (°C) | nd. | 214 |
| **Results** | | |

(continued)

| Results | | |
|---|---|---|
| Sag value (mm) | 13 | 8 |
| nd. = not determined | | |

**Example 3:** influence on sagging of the content of CNT in the composite material of layer A

3-layers multilayered sheets were formed according to the below composition, and in the same conditions than in example 1. The thickness distribution A/B/A for 1000 $\mu$m total thickness is given in table 3.

The sheets were made at 18 kg/h and 220 °C melt temperature; the calenders were at 85 °C and running at 1.3 m/min.

Layer A was produced by blending and extruding in a single step:

- HIPS (high impact polystyrene) having a MFI of 2.8 g/10 min in accordance to ISO 1133H, a glass transition temperature Tg of 101 °C and a heat deflection temperature of 78.2 °C, commercially available from Total as the commercial grade HIPS 8260.
- Masterbatch of Polystyrene containing 10% of carbon nanotubes from Nanocyl.

Layer B: HIPS (high impact polystyrene) having a MFI of 2.8 g/10 min in accordance to ISO 1133H and a heat deflection temperature of 78.2 °C (Total commercial grade HIPS 8260).

From the results displayed on table 3, it can be seen that the content of CNT in the multi-layered sheet influences the sagging properties. However, for cost reasons it is preferable to keep the content of CNT as low as possible.

Conditions for sag value measurement: Tr = 400 °C, Tc = 76 seconds, targeted $T_{SF}$ = 215 °C

Table 3

| | Thickness distribution | CNT wt% in layer A | CNT wt% in the sheet | Surface resistivity | Sag value |
|---|---|---|---|---|---|
| CE3 | 1/8/1 | 3.0 | 0.6 | 10^4 Ohms | 12 mm |
| CE4 | 1/8/1 | 4.0 | 0.8 | 10^4 Ohms | 8 mm |
| CE5 | 0.5/9/0.5 | 3.0 | 0.3 | 10^5 Ohms | 20 mm |
| CE6 | 0.5/9/0.5 | 4.0 | 0.4 | 10^4 Ohms | 19 mm |

**Example 4:** influence on sagging of a styrenic copolymer in layer A

3-layers multilayered sheets were formed according to the below composition, and in the same conditions than in example 1. The thickness distribution A/B/A was 1/8/1 for 1000 $\mu$m total thickness.

The sheets were made at 18 kg/h and 220 °C melt temperature; the calenders were at 85 °C and running at 1.3 m/min.

Layer A was produced by blending and extruding in a single step:

- HIPS (high impact polystyrene) having a MFI of 2.8 g/10 min in accordance to ISO 1133H, a glass transition temperature Tg of 101 °C and a heat deflection temperature of 78.2 °C, commercially available from Total as the commercial grade HIPS 8260.
- Masterbatch of Polystyrene containing 10% of carbon nanotubes from Nanocyl
- Optionally SBS (styrene butadiene styrene copolymer) commercial grade BASF 3G55.

Layer B: HIPS (high impact polystyrene) having a MFI of 2.8 g/10 min in accordance to ISO 1133H and a heat deflection temperature of 78.2 °C (Total commercial grade HIPS 8260).

CE1 and CE3 are the same sheets as in examples 1 and 3 respectively. From the results displayed on table 4, it can be seen that the content of styrenic copolymer in the layer A influences the sagging properties. Without being bound by a theory it is believed that the presence of SBS reduce the glass transition temperature of the composite material of layer A. However, it has been shown during the experiment that the presence of styrenic copolymer is beneficial to the brittle properties of the sheet, so that it is preferable to have styrenic copolymer in layer A.

Conditions for sag value measurement: Tr = 400 °C, Tc = 76 seconds, targeted $T_{SF}$ = 215 °C

Table 4

| | SBS wt% in layer A | CNT wt% in layer A | CNT wt% in the sheet | Surface resistivity | Sag value |
|---|---|---|---|---|---|
| CE3 | 0 | 3.0 | 0.6 | 10^4 Ohms | 12 mm |
| CE7 | 10 | 3.0 | 0.6 | 10^4 Ohms | 13 mm |
| CE1 | 20 | 3.0 | 0.6 | 10^4 Ohms | 15 mm |

**Claims**

1. A multilayered sheet **characterised in that** it contains at least one layer of each of:

   - a surface layer A comprising a composite material, wherein said composite material comprises a first amorphous polymer having a glass transition temperature Tg1 and from 0.05 wt% to 4.0 wt% of a conductive material as based on the total weight of the composite material;
   - a substrate layer B comprising a polymer composition, wherein said polymer composition comprises at least 10 wt% as based on the total weight of the polymer composition of a second amorphous polymer having a glass transition temperature Tg2, the glass transition temperature Tg2 of the second amorphous polymer being higher than the glass transition temperature Tg1 of the first amorphous polymer ; the glass transition temperature being determined according to ISO 11357-2:2013; and wherein the second amorphous polymer has a heat deflection temperature of at least 85 °C as determined in accordance with ISO 75-2/A conditions 80 °C, 4H, 1.8 MPA, annealed;

   and further wherein at least one of the outer layers is the surface layer A.

2. The multilayered sheet according to claim 1 **characterised in that** it comprises two or more layers B, wherein all layers B are made of the same polymer composition and/or multilayered sheet contains at most two kinds of layers being layer A and layer B.

3. The multilayered sheet according to any one of claims 1 to 2 **characterised in that** the first and second amorphous polymers are selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof.

4. The multilayered sheet according to any one of claims 1 to 3 **characterised in that** the first amorphous polymer is selected from general purpose polystyrene (GPPS), high impact polystyrene (HIPS), acrylonitrile-butadiene-styrene (ABS) and mixture thereof, preferably the first amorphous polymer is a polystyrene selected from general purpose polystyrene (GPPS), high impact polystyrene (HIPS) and mixture thereof.

5. The multilayered sheet according to any one of claims 1 to 4 **characterised in that**:

   - the first amorphous polymer has a melt flow index ranging from 1 to 10 g/10 min as determined according to ISO 1133 conditions H under a load of 5 kg at a temperature of 200 °C; and/or
   - the second amorphous polymer has a melt volume rate ranging from 1 to 10 $cm^3$/10 min as determined according to ISO 1133 under a load of 10 kg at a temperature of 220 °C; and/or
   - second amorphous polymer has a heat deflection temperature of at least 88 °C as determined in accordance with ISO 75-2/A conditions 80 °C, 4H, 1.8 MPA, annealed, preferably at least 90 °C, more preferably at least 92 °C.

6. The multilayered sheet according to any one of claims 1 to 5 **characterised in that** the second amorphous polymer is selected from acrylonitrile-butadiene-styrene (ABS), poly(p-phenylene ether) (PPE), styrene acrylonitrile (SAN) and mixture thereof.

7. The multilayered sheet according to any one of claims 1 to 6 **characterised in that** the composite material of layer A further comprises from 0.01 to 50 wt% as based on the total weight of the composite material of a styrenic copolymer, preferably wherein the styrenic copolymer is selected from styrene-butadiene-styrene block copolymer (SBS) or styrene-ethylene-butadiene-styrene block copolymer (SEBS).

8. The multilayered sheet according to any one of claims 1 to 7 **characterised in that** the conductive material in the composite material of layer A is selected from the group comprising carbon nanotubes, carbon nanofibres, carbon black, metal fibres, metal powders and blends thereof, preferably from the group comprising carbon nanotubes, carbon nanofibres, carbon black, and blends thereof, more preferably the conductive material is carbon nanotubes.

9. The multilayered sheet according to any one of claims 1 to 8 **characterised in that**:

 - the conductive material is carbon nanotubes and the composite material of layer A comprises from 0.5 to 3.0 % by weight of carbon nanotubes based on the total weight of the composite material as determined according to ISO 11358; and/or
 - the composite material of layer A has a surface resistivity of at most $1x10^8$ Ohm/sq, preferably at most $1x10^6$ Ohm/sq as determined according to CEI 60167.

10. The multilayered sheet according to any one of claims 1 to 9 **characterised in that** the conductive material is carbon nanotubes and the multi-layered sheet comprises from 0.05 to 1.6 % by weight of carbon nanotubes based on the total weight of the multilayered sheet as determined according to ISO 11358, preferably from 0.08 to 0.9 % by weight of carbon nanotubes.

11. The multilayered sheet according to any one of claims 1 to 10 **characterised in that** the heat deflection temperature of the second amorphous polymer is at least 10 °C higher than the heat deflection temperature of the first amorphous polymer, the heat deflection temperature being determined according to ISO 75-2/A conditions 80 °C, 4H, 1.8 MPA, annealed, preferably at least 12 °C higher.

12. The multilayered sheet according to any one of claims 1 to 11 **characterised in that** the content of the second amorphous polymer in the polymer composition of layer B is:

 - at least 25 wt% as based on the total weight of the polymer composition, preferably at least 30 wt% more preferably at least 50 wt% and/or
 - up to 100 wt% of the second amorphous polymer as based on the total weight of the polymer composition.

13. Process to produce a multilayered sheet according to any one of claims 1 to 12 **characterised in that** the process comprises at least one of the following:

 - a step of co-extrusion of at least one layer A and one layer B; and/or
 - a step of blending and extruding in a single step the first amorphous polymer with a masterbatch comprising a conductive material and optionally with a styrenic copolymer; and/or
 - a step of blending and extruding in a single step the second amorphous polymer, optionally with one or more amorphous polymer selected from polystyrene (PS), acrylonitrile-butadiene-styrene (ABS), polycarbonate (PC), styrene acrylonitrile (SAN), poly(methyl methacrylate) (PMMA), poly(vinyl chloride) (PVC), polybutadiene (PBu), polybutylene terephthalate (PBt), poly(p-phenylene oxide) (PPO), poly(p-phenylene ether) (PPE), polysulfone (PSU), polyethersulfone (PES), polyethylenimine (PEI), polyphenylsulfone (PPSU), acrylonitrile styrene acrylate (ASA) or any combination thereof.

14. A thermoformed article made from a multilayered sheet according to any one of claims 1 to 12, with preference the article is selected from packaging containers for electronic devices, trays and carrier tapes.

15. The use in a multilayered sheet of at least one substrate layer B comprising a polymer composition comprising at least 10 wt% as based on the total weight of the polymer composition of a second amorphous polymer having a heat deflection temperature of at least 85 °C as determined in accordance with ISO 75-2/A conditions 80 °C, 4H, 1.8 MPA, annealed and a glass transition temperature Tg2 that is higher than the glass transition temperature Tg1 of a first amorphous polymer comprised in a composite material forming a surface layer A, wherein the composite material comprises a first amorphous polymer having a glass transition temperature Tg1 and from 0.05 wt% to 4.0 wt% as based on the total weight of the composite material of a conductive material, wherein the multilayered sheet contains at least one layer of each of layer A and layer B and wherein at least one of the outer layers is the surface layer A, the glass transition temperature being determined according to ISO 11357-2:2013.

**Patentansprüche**

1. Mehrschichtfolie, **dadurch gekennzeichnet, dass** sie mindestens eine Schicht von jedem der Folgenden enthält:

    - eine Oberflächenschicht A, die ein Verbundmaterial umfasst, wobei das Verbundmaterial ein erstes amorphes Polymer mit einer Glasübergangstemperatur Tg1 und 0,05 bis 4,0 Gew.-% eines leitfähigen Materials, bezogen auf das Gesamtgewicht des Verbundmaterials, umfasst;
    - eine Substratschicht B, die eine Polymerzusammensetzung umfasst, wobei die Polymerzusammensetzung mindestens 10 Gew.-%, bezogen auf das Gesamtgewicht der Polymerzusammensetzung, eines zweiten amorphen Polymers umfasst, das eine Glasübergangstemperatur Tg2 aufweist, wobei die Glasübergangstemperatur Tg2 des zweiten amorphen Polymers höher ist als die Glasübergangstemperatur Tg1 des ersten amorphen Polymers; wobei die Glasübergangstemperatur gemäß ISO 11357-2:2013 bestimmt wird; und wobei das zweite amorphe Polymer eine Wärmeformbeständigkeitstemperatur von mindestens 85°C aufweist, bestimmt gemäß den Bedingungen der ISO 75-2/A: 80°C, 4H, 1,8 MPA, geglüht;

    und wobei ferner mindestens eine der äußeren Schichten die Oberflächenschicht A ist.

2. Mehrschichtfolie nach Anspruch 1, **dadurch gekennzeichnet, dass** sie zwei oder mehr Schichten B umfasst, wobei alle Schichten B aus der gleichen Polymerzusammensetzung bestehen und/oder die Mehrschichtfolie höchstens zwei Arten von Schichten enthält, nämlich Schicht A und Schicht B.

3. Mehrschichtfolie nach einem der Ansprüche 1 bis 2, **dadurch gekennzeichnet, dass** das erste und das zweite amorphe Polymer ausgewählt sind aus Polystyrol (PS), Acrylnitril-Butadien-Styrol (ABS), Polycarbonat (PC), Styrolacrylnitril (SAN), Poly(methylmethacrylat) (PMMA), Poly(vinylchlorid) (PVC), Polybutadien (PBu), Polybutylenterephthalat (PBt), Poly(p-phenylenoxid) (PPO), Poly(*p*-phenylenether) (PPE), Polysulfon (PSU), Polyethersulfon (PES), Polyethylenimin (PEI), Polyphenylsulfon (PPSU), Acrylnitrilstyrolacrylat (ASA) oder einer beliebigen Kombination davon.

4. Mehrschichtfolie nach einem der Ansprüche 1 bis 3, **dadurch gekennzeichnet, dass** das erste amorphe Polymer ausgewählt ist aus Standard-Polystyrol (GPPS), schlagfestem Polystyrol (HIPS), Acrylnitril-Butadien-Styrol (ABS) und einer Mischung davon und das erste amorphe Polymer vorzugsweise ein Polystyrol ist, ausgewählt aus Standard-Polystyrol (GPPS), schlagfestem Polystyrol (HIPS) und einer Mischung davon.

5. Mehrschichtfolie nach einem der Ansprüche 1 bis 4, **dadurch gekennzeichnet, dass**:

    - das erste amorphe Polymer einen Schmelzflussindex im Bereich von 1 bis 10 g/10 min aufweist, bestimmt gemäß den Bedingungen der ISO 1133: H unter einer Last von 5 kg bei einer Temperatur von 200°C; und/oder
    - das zweite amorphe Polymer eine Schmelze-Volumenfließrate im Bereich von 1 bis 10 cm$^3$/10 min aufweist, bestimmt gemäß ISO 1133 unter einer Last von 10 kg bei einer Temperatur von 220°C; und/oder
    - das zweite amorphe Polymer eine Wärmeformbeständigkeitstemperatur von mindestens 88°C aufweist, bestimmt gemäß den Bedingungen der ISO 75-2/A: 80°C, 4H, 1,8 MPA, geglüht, vorzugsweise mindestens 90°C, bevorzugter mindestens 92°C.

6. Mehrschichtfolie nach einem der Ansprüche 1 bis 5, **dadurch gekennzeichnet, dass** das zweite amorphe Polymer ausgewählt ist aus Acrylnitril-Butadien-Styrol (ABS), Poly(*p*-phenylenether) (PPE), Styrolacrylnitril (SAN) und deren Mischung.

7. Mehrschichtfolie nach einem der Ansprüche 1 bis 6, **dadurch gekennzeichnet, dass** das Verbundmaterial der Schicht A ferner 0,01 bis 50 Gew.-%, bezogen auf das Gesamtgewicht des Verbundmaterials, eines Styrolcopolymers umfasst, wobei das Styrolcopolymer vorzugsweise ausgewählt ist aus Styrol-Butadien-Styrol-Blockcopolymer (SBS) oder Styrol-Ethylen-Butadien-Styrol-Blockcopolymer (SEBS).

8. Mehrschichtfolie nach einem der Ansprüche 1 bis 7, **dadurch gekennzeichnet, dass** das leitfähige Material in dem Verbundmaterial der Schicht A ausgewählt ist aus der Gruppe umfassend Kohlenstoffnanoröhren, Kohlenstoffnanofasern, Ruß, Metallfasern, Metallpulvern und Mischungen davon, vorzugsweise aus der Gruppe umfassend Kohlenstoffnanoröhren, Kohlenstoffnanofasern, Ruß und Mischungen davon, und es sich bei dem leitfähigen Material bevorzugter um Kohlenstoffnanoröhren handelt.

9. Mehrschichtfolie nach einem der Ansprüche 1 bis 8, **dadurch gekennzeichnet, dass**:

- es sich bei dem leitfähigen Material um Kohlenstoffnanoröhren handelt und das Verbundmaterial der Schicht A 0,5 bis 3,0 Gew.-% Kohlenstoffnanoröhren, bezogen auf das Gesamtgewicht des Verbundmaterials, umfasst, bestimmt gemäß ISO 11358; und/oder
- das Verbundmaterial der Schicht A einen Oberflächenwiderstand von höchstens $1 \times 10^8$ Ohm/sq, vorzugsweise höchstens $1 \times 10^6$ Ohm/sq, bestimmt gemäß CEI 60167, aufweist.

10. Mehrschichtfolie nach einem der Ansprüche 1 bis 9, **dadurch gekennzeichnet, dass** es sich bei dem leitfähigen Material um Kohlenstoffnanoröhren handelt und die Mehrschichtfolie 0,05 bis 1,6 Gew.-% Kohlenstoffnanoröhren, bezogen auf das Gesamtgewicht der Mehrschichtfolie, bestimmt gemäß ISO 11358, vorzugsweise 0,08 bis 0,9 Gew.-% Kohlenstoffnanoröhren umfasst.

11. Mehrschichtfolie nach einem der Ansprüche 1 bis 10, **dadurch gekennzeichnet, dass** die Wärmeformbeständigkeitstemperatur des zweiten amorphen Polymers mindestens 10°C höher ist als die Wärmeformbeständigkeitstemperatur des ersten amorphen Polymers, wobei die Wärmeformbeständigkeitstemperatur gemäß den Bedingungen der ISO 75-2/A bestimmt wird: 80°C, 4H, 1,8 MPA, geglüht, vorzugsweise mindestens 12°C höher ist.

12. Mehrschichtfolie nach einem der Ansprüche 1 bis 11, **dadurch gekennzeichnet, dass** der Gehalt des zweiten amorphen Polymers in der Polymerzusammensetzung der Schicht B Folgendes beträgt:

- mindestens 25 Gew.-%, bezogen auf das Gesamtgewicht der Polymerzusammensetzung, vorzugsweise mindestens 30 Gew.-%, bevorzugter mindestens 50 Gew.-% und/oder
- bis zu 100 Gew.-% des zweiten amorphen Polymers, bezogen auf das Gesamtgewicht der Polymerzusammensetzung.

13. Verfahren zum Herstellen einer Mehrschichtfolie nach einem der Ansprüche 1 bis 12, **dadurch gekennzeichnet, dass** das Verfahren mindestens eines der folgenden umfasst:

- einen Schritt der gemeinsamen Extrusion von mindestens einer Schicht A und einer Schicht B; und/oder
- einen Schritt des Mischens und Extrudierens des ersten amorphen Polymers mit einer Hauptcharge, die ein leitfähiges Material umfasst, und gegebenenfalls mit einem Styrolcopolymer in einem einzigen Schritt; und/oder
- einen Schritt des Mischens und Extrudierens des zweiten amorphen Polymers gegebenenfalls mit einem oder mehreren amorphen Polymeren, ausgewählt aus Polystyrol (PS), Acrylnitril-Butadien-Styrol (ABS), Polycarbonat (PC), Styrolacrylnitril (SAN), Poly(methylmethacrylat) (PMMA), Poly(vinylchlorid) (PVC), Polybutadien (PBu), Polybutylenterephthalat (PBt), Poly(p-phenylenoxid) (PPO), Poly(*p*-phenylenether) (PPE), Polysulfon (PSU), Polyethersulfon (PES), Polyethylenimin (PEI), Polyphenylsulfon (PPSU), Acrylnitrilstyrolacrylat (ASA) oder einer beliebigen Kombination davon, in einem einzigen Schritt.

14. Thermoform-Artikel, hergestellt aus einer Mehrschichtfolie nach einem der Ansprüche 1 bis 12, wobei der Artikel vorzugsweise aus Verpackungsbehältern für elektronische Geräte, Tabletts und Trägerbändern ausgewählt ist.

15. Verwendung von mindestens einer Substratschicht B in einer Mehrschichtfolie, wobei die Substratschicht B eine Polymerzusammensetzung umfasst, die mindestens 10 Gew.-%, bezogen auf das Gesamtgewicht der Polymerzusammensetzung, eines zweiten amorphen Polymers umfasst, das eine Wärmeformbeständigkeitstemperatur von mindestens 85 °C, bestimmt gemäß den Bedingungen der ISO 75-2/A: 80°C, 4H, 1,8 MPA, geglüht, und eine Glasübergangstemperatur Tg2 aufweist, die höher ist als die Glasübergangstemperatur Tg1 eines ersten amorphen Polymers, das in einem eine Oberflächenschicht A bildenden Verbundmaterial enthalten ist, wobei das Verbundmaterial ein erstes amorphes Polymer mit einer Glasübergangstemperatur Tg1 und 0,05 bis 4,0 Gew.-%, bezogen auf das Gesamtgewicht des Verbundmaterials, eines leitfähigen Materials umfasst, wobei die Mehrschichtfolie mindestens jeweils eine Schicht von Schicht A und Schicht B enthält und wobei mindestens eine der äußeren Schichten die Oberflächenschicht A ist, wobei die Glasübergangstemperatur gemäß ISO 11357-2:2013 bestimmt wird.

**Revendications**

1. Feuille multicouche **caractérisée en ce qu'**elle contient au moins une couche de chacun des éléments suivants :

- une couche de surface A comprenant un matériau composite, ledit matériau composite comprenant un premier polymère amorphe ayant une température de transition vitreuse Tg1 et de 0,05 % en poids à 4,0 % en poids, par rapport au poids total du matériau composite, d'un matériau conducteur ;
- une couche de substrat B comprenant une composition polymère, ladite composition polymère comprenant au moins 10 % en poids, par rapport au poids total de la composition polymère, d'un second polymère amorphe ayant une température de transition vitreuse Tg2, la température de transition vitreuse Tg2 du second polymère amorphe étant supérieure à la température de transition vitreuse Tg1 du premier polymère amorphe ; la température de transition vitreuse étant déterminée conformément à l'ISO 11357-2:2013; et le second polymère amorphe ayant une température de fléchissement à chaud d'au moins 85 °C, déterminée conformément l'ISO 75-2/A 80 °C, conditions 4H, 1,8 MPA, recuit ;

et en outre dans laquelle au moins l'une des couches extérieures est la couche de surface A.

2. Feuille multicouche selon la revendication 1, **caractérisée en ce qu'**elle comprend deux couches B ou plus, toutes les couches B étant constituées de la même composition polymère et/ou que la feuille multicouche contient au plus deux types de couches, à savoir la couche A et la couche B.

3. Feuille multicouche selon l'une quelconque des revendications 1 à 2, **caractérisée en ce que** les premier et second polymères amorphes sont choisis parmi le polystyrène (PS), l'acrylonitrile-butadiène-styrène (ABS), le polycarbonate (PC), le styrène acrylonitrile (SAN), le poly(méthacrylate de méthyle) (PMMA), le poly(chlorure de vinyle) (PVC), le polybutadiène (PBu), le poly(téréphtalate de butylène) (PBt), le poly(oxyde de p-phénylène) (PPO), le poly(*p*-phénylène éther) (PPE), le polysulfone (PSU), la polyéthersulfone (PES), la polyéthylèneimine (PEI), la polyphénylsulfone (PPSU), l'acrylonitrile styrène acrylate (ASA) ou toute combinaison de ceux-ci.

4. Feuille multicouche selon l'une quelconque des revendications 1 à 3, **caractérisée en ce que** le premier polymère amorphe est choisi parmi le polystyrène à usage général (GPPS), le polystyrène choc (HIPS), l'acrylonitrile-butadiène-styrène (ABS) et leur mélange, de préférence le premier polymère amorphe est un polystyrène choisi parmi le polystyrène à usage général (GPPS), le polystyrène choc (HIPS) et leurs mélanges.

5. Feuille multicouche selon l'une quelconque des revendications 1 à 4, **caractérisée en ce que** :

- le premier polymère amorphe a un indice de fluidité à chaud allant de 1 à 10 g/10 min, déterminé conformément à l'ISO 1133 conditions H sous une charge de 5 kg à une température de 200 °C ; et/ou
- le second polymère amorphe a un indice de fluidité à chaud en volume allant de 1 à 10 cm$^3$/10 min tel que déterminé selon la norme ISO 1133 sous une charge de 10 kg à une température de 220 °C ; et/ou
- le second polymère amorphe a une température de fléchissement à chaud d'au moins 88 °C déterminée conformément à l'ISO 75-2/A, 80 °C, conditions 4H, 1,8 MPA, recuit, de préférence d'au moins 90 °C, de manière davantage préférée d'au moins 92 °C.

6. Feuille multicouche selon l'une quelconque des revendications 1 à 5, **caractérisée en ce que** le second polymère amorphe est choisi parmi l'acrylonitrile-butadiène-styrène (ABS), le poly(*p*-phénylène éther) (PPE), le styrène acrylonitrile (SAN) et leurs mélanges.

7. Feuille multicouche selon l'une quelconque des revendications 1 à 6, **caractérisée en ce que** le matériau composite de la couche A comprend en outre de 0,01 à 50 % en poids, par rapport au poids total du matériau composite, d'un copolymère styrénique, de préférence dans lequel le copolymère styrénique étant choisi parmi le copolymère à blocs styrène-butadiène-styrène (SBS) ou le copolymère à blocs styrène-éthylène-butadiène-styrène (SEBS).

8. Feuille multicouche selon l'une quelconque des revendications 1 à 7, **caractérisée en ce que** le matériau conducteur dans le matériau composite de la couche A est choisi dans le groupe comprenant les nanotubes de carbone, les nanofibres de carbone, le noir de carbone, les fibres métalliques, leurs poudres métalliques et leurs mélanges, de préférence dans le groupe comprenant les nanotubes de carbone, les nanofibres de carbone, le noir de carbone et leurs mélanges, le matériau conducteur étant constitué de préférence de nanotubes de carbone.

9. Feuille multicouche selon l'une quelconque des revendications 1 à 8, **caractérisée en ce que** :

- le matériau conducteur est constitué de nanotubes de carbone et le matériau composite de la couche A comprend de 0,5 à 3,0 % en poids de nanotubes de carbone, par rapport au poids total du matériau composite, tel que déterminé selon l'ISO 11358 ; et/ou
- le matériau composite de la couche A a une résistivité superficielle d'au plus 1x10$^8$ ohms/carré, de préférence d'au plus 1x10$^6$ ohms/carré telle que déterminée selon CEI 60167.

**10.** Feuille multicouche selon l'une quelconque des revendications 1 à 9, **caractérisée en ce que** le matériau conducteur est constitué de nanotubes de carbone et **en ce que** la feuille multicouche comprend de 0,05 à 1,6% en poids de nanotubes de carbone, par rapport au poids total de la feuille multicouche, comme déterminé conformément à l'ISO 11358, de préférence de 0,08 à 0,9 % en poids de nanotubes de carbone.

**11.** Feuille multicouche selon l'une quelconque des revendications 1 à 10, **caractérisée en ce que** la température de fléchissement à chaud du second polymère amorphe est supérieure d'au moins 10 °C à la température de fléchissement à chaud du premier polymère amorphe, la température de fléchissement à chaud étant déterminée conformément à l'ISO 75-2/A 80 °C, conditions 4H, 1,8 MPA, recuit, de préférence supérieure d'au moins 12 °C.

**12.** Feuille multicouche selon l'une quelconque des revendications 1 à 11, **caractérisée en ce que** la teneur de la composition polymère de la couche B en le second polymère amorphe est :

- d'au moins 25 % en poids par rapport au poids total de la composition polymère, de préférence d'au moins 30 % en poids, de manière davantage préférée d'au moins 50 % en poids et/ou
- jusqu'à 100 % en poids du second polymère amorphe, par rapport au poids total de la composition polymère.

**13.** Procédé pour produire une feuille multicouche selon l'une quelconque des revendications 1 à 12, **caractérisé en ce que** le procédé comprend au moins l'un des éléments suivants :

- une étape de coextrusion d'au moins une couche A et d'une couche B ; et/ou
- une étape de mélange et d'extrusion en une seule étape du premier polymère amorphe avec un mélange maître comprenant un matériau conducteur et éventuellement avec un copolymère styrénique ; et/ou
- une étape de mélange et d'extrusion en une seule étape du second polymère amorphe, éventuellement avec un ou plusieurs polymères amorphes choisis parmi le polystyrène (PS), l'acrylonitrile-butadiène-styrène (ABS), le polycarbonate (PC), le styrène-acrylonitrile (SAN), le poly(méthacrylate de méthyle) (PMMA), le poly(chlorure de vinyle) (PVC), le polybutadiène (PBu), le poly(téréphtalate de butylène) (PBt), le poly(oxyde de p-phénylène) (PPO), le poly(*p*-phénylène éther) (PPE), la polysulfone (PSU), la polyéthersulfone (PES), la polyéthylèneimine (PEI), la polyphénylsulfone (PPSU), l'acrylonitrilestyrène-acrylate (ASA) ou toute combinaison de ceux-ci.

**14.** Article thermoformé fabriqué à partir d'une feuille multicouche selon l'une quelconque des revendications 1 à 12, l'article étant de préférence choisi parmi les récipients d'emballage pour dispositifs électroniques, les plateaux et les bandes de support.

**15.** Utilisation dans une feuille multicouche d'au moins une couche de substrat B comprenant une composition polymère comprenant au moins 10 % en poids, par rapport au poids total de la composition polymère, d'un second polymère amorphe ayant une température de fléchissement à chaud d'au moins 85 °C, telle que déterminée conformément à l'ISO 75-2/A conditions 80 °C, 4H, 1,8 MPA, recuit et une température de transition vitreuse Tg2 supérieure à la température de transition vitreuse Tg1 du premier polymère amorphe compris dans un matériau composite formant une couche de surface A, le matériau composite comprenant un premier polymère amorphe ayant une température de transition vitreuse Tg1 et de 0,05 % en poids à 4,0 % en poids, par rapport au poids total du matériau composite, d'un matériau conducteur, la feuille multicouche contenant au moins une couche de chacune des couches A et B et au moins l'une des couches extérieures étant la couche de surface A, la température de transition vitreuse étant déterminée selon l'ISO 11357-2:2013.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014193560 B
- EP 1787804 A
- JP 2003103705 A
- EP 2401311 A
- US 20120289656 A
- WO 2015014897 A

**Non-patent literature cited in the description**

- Plastics Additives Handbook. Hanser Publishers, 2001
- *CHEMICAL ABSTRACTS,* 128961-68-2
- *CHEMICAL ABSTRACTS,* 68411-46-1